# EUROPEAN PATENT SPECIFICATION

(11) **EP 3 018 575 B1**
(45) Date of publication and mention of the grant of the patent: **23.08.2017**
(21) Application number: 15192179.8
(22) Date of filing: 29.10.2015
(51) Int. Cl.: G06F 3/16, G06F 3/041, G06F 3/0488, G06F 3/0354, G09B 5/06, G06F 3/01

(54) **ELECTRONIC BLACKBOARD APPARATUS AND CONTROLLING METHOD THEREOF**
ELEKTRONISCHE WANDTAFELVORRICHTUNG UND STEUERUNGSVERFAHREN DAFÜR
DISPOSITIF À TABLEAU ÉLECTRONIQUE ET SON PROCÉDÉ DE COMMANDE

(30) Priority: 05.11.2014 KR 20140153081
(43) Date of publication of application: 11.05.2016
(73) Proprietor: Samsung Electronics Co., Ltd., Gyeonggi-do 16677 (KR)
(72) Inventor: SUNG, Eun-sook, Gyeonggi-do (KR)
(74) Representative: Walaski, Jan Filip

(56) References cited:
- WO-A1-2013/176365
- CN-A- 103 325 281
- KR-A- 20050 047 314
- US-A1- 2010 332 226

## Description

The present invention generally relates to an electronic blackboard apparatus and a controlling method for the electronic blackboard apparatus, for example, to providing an electronic blackboard apparatus that efficiently stores a user voice received in relation to a writing input.

The development of electronic technologies has brought the development and distribution of various types of electronic products. In particular, various types of display apparatuses, such as a television (TV), a portable phone, a personal computer (PC), a notebook PC, a personal digital assistant (PDA), etc., have been largely used in most homes.

In particular, an electronic blackboard apparatus, which includes a function of displaying content like a display apparatus and having a writing input function, has been largely used.

A user mainly speaks while performing writing to use such an electronic blackboard apparatus. Also, a microphone of the electronic blackboard apparatus records words of the user to store the words as a voice file.

However, it is inconvenient to search for a voice file that the user wants, among voice files that are stored.

For example, when the user wants to repeat a conversation content that the user speaks when writing one of contents written on a screen of the electronic blackboard apparatus, the user may not know which voice file includes a desired conversation content and when the voice file is to be played.

WO2013176365 relates to a mobile device which can record audio input in synchronisation with handwriting received by the mobile device.

Example embodiments address at least the above problems and/or disadvantages and other disadvantages not described above.

The example embodiments provide an electronic blackboard apparatus that stores a received user voice as a voice file corresponding to at least one area, and a controlling method for the electronic blackboard apparatus.

According to an aspect of the present invention, there is provided an electronic blackboard according to claim 1.

According to a second aspect of the present invention, there is provided a method of controlling an electronic blackboard according to claim 11.

According to an aspect of the example embodiments, an electronic blackboard apparatus is provided, including: a display configured to display a screen divided into a plurality of areas; a user interface (UI) configured to receive a writing input in at least one of the plurality of areas; a microphone configured to receive a user voice; a storage configured to store the received user voice as a voice file; and a controller configured to control the electronic blackboard apparatus to store a user voice received through the microphone in response to the writing input being received in the at least one area, as a voice file corresponding to the at least one area and display a graphical user interface (GUI) corresponding to the voice file in a corresponding area based on a preset event.

The electronic blackboard apparatus may further include a sensor configured to sense the writing input on the screen. The controller may be configured to start voice recording in response to a start of the writing input being sensed in the at least one area, end the voice recording in response to an end of the writing input being sensed, and store a recorded voice as a voice file corresponding to the at least one area.

The display may display guide lines dividing the plurality of areas. In response to a guide line for at least one of the plurality of areas, being changed based on a received command, the controller may be configured to re-divide and provide the plurality of areas so that the plurality of areas correspond to the changed guide line.

In response to an image writing input being received, the controller may be configured to capture and store an image, which may be written at preset time intervals in frames, determine an image difference between images respectively captured in the frames, and map and store a voice file corresponding to the determined image difference.

In response to receiving a command, such as, for example, a user command being input, to select at least some of the written images in response to the image writing input being completed, the controller may be configured to provide a voice file mapped to the selected at least some images.

In response to a plurality of user voices being received through the microphone in response to the writing input being received in the at least one area, the controller may be configured to generate voice files respectively corresponding to the plurality of users based on voice frequencies respectively corresponding to the plurality of user voices and store the voice files as a voice file corresponding to the at least one area.

The controller may be configured to set an area, on which the writing input is focused, to a preset area and store a user voice, which is received through the microphone in response to the writing input being received, as a voice file corresponding to the preset area.

The controller may be configured to change and provide a screen page according to a preset event, integrate voice files respectively corresponding to a plurality of areas constituting a first screen page into a first voice file, map and store the first voice file on a content written on the first screen page, integrate voice files respectively corresponding to a plurality of areas constituting a second screen page into a second voice file, and map and store the second voice file on a content written on the second screen page.

The controller may be configured to provide the contents written on the first and second screen pages in thumbnail forms on a timeline according to a preset event, display a screen page corresponding to a selected thumbnail as a whole screen, and provide integrated voice file information corresponding to the displayed screen page.

The controller may be configured to extract a keyword from at least one of a written content and a voice file corresponding to the written content, generate a search tag based on the keyword, and map and store the search tag on the written content and the voice file corresponding to the written content.

[0020] According to another aspect of the example embodiments, a method of controlling an electronic blackboard apparatus is provided, the method including: displaying a screen divided into a plurality of areas; receiving a writing input in at least one of the plurality of areas; receiving a user voice; and controlling the electronic blackboard apparatus to store the user voice, received in response to the writing input being received in the at least one area, as a voice file corresponding to the at least one area and display a graphical user interface (GUI) corresponding to the voice file in a corresponding area according to a preset event.

The method may further include: sensing a writing input on the screen. The controlling may include: starting voice recording in response to a start of a writing input being sensed in the at least one area, ending the voice recording in response to an end of the writing input being sensed, and storing a recorded voice as a voice file corresponding to the at least one area.

The displaying may include: displaying guide lines dividing the plurality of areas. The controlling may include: in response to a guide line for at least one of the plurality of areas, being changed, re-dividing the screen and providing the plurality of areas so that the plurality of areas correspond to the changed guide line.

The controlling may include: in response to an image writing input being received, capturing and storing an image written at preset time intervals in frames, determining an image difference between images respectively captured in the frames, and mapping and storing a voice file corresponding to the determined image difference.

The controlling may include: in response to receiving a user command to select at least some of written images in response to the image writing input being completed, providing voice files mapped to the selected at least some images.

The controlling may include: in response to a plurality of user voices being received in response to the writing input being received in the at least one area, generating voice files respectively corresponding to the plurality of user voices based on voice frequencies respectively corresponding to the plurality of user voices, and storing the voice files as a voice file corresponding to the at least one area.

The controlling may include: setting an area, on which the writing input is focused, as a preset area and storing a user voice, which is received in response to the writing input being received, as a voice file corresponding to the preset area.

The method may further include: changing and providing a screen page according to a preset event, integrating voice files respectively corresponding to a plurality of areas of a first screen page into a first voice file, mapping and storing the first voice file to a content written on the first screen page, integrating voice files respectively corresponding to a plurality of areas of a second screen page into a second voice file, and mapping and storing the second voice file to a content written on the second screen page.

The controlling may include: providing the contents written on the first and second screen pages in thumbnail forms on a timeline according to a preset event, displaying a screen page corresponding to a selected thumbnail as a whole screen, and providing the displayed screen page as integrated voice file information.

The method may further include: extracting a keyword from at least one of a written content and a voice file corresponding to the written content, generating a search tag based on the keyword, and mapping and storing the search tag to a voice file corresponding to the written content and the voice file corresponding to the written content.

According to various example embodiments described above, a user may easily search for a conversation content associated with a content written on an electronic blackboard apparatus. Therefore, convenience of the user and user satisfaction may be increased.

The above and/or other aspects and advantages of the example embodiments will become more apparent from the following detailed description taken in conjunction with the accompanying drawings, in which like reference numerals refer to like elements, and wherein:
FIG. 1 is a block diagram illustrating a structure of an electronic blackboard apparatus according to an example embodiment;
FIG. 2 is a block diagram illustrating a structure of an electronic blackboard apparatus according to another example embodiment;
FIG. 3 is a view illustrating a relationship between a written content and a voice file according to an example embodiment;
FIG. 4 is a view illustrating a relationship between a writing input and a voice file in detail according to an example embodiment;
FIGS. 5 and 6 are views illustrating a change in an area size according to an example embodiment;
FIG. 7 is a view illustrating a process of storing a voice file based on a changed image according to an example embodiment;
FIG. 8 is a view illustrating a process of playing a recorded file corresponding to a selected area according to an example embodiment;
FIG. 9 is a view illustrating recorded voices of a plurality of users according to an example embodiment;
FIG. 10 is a view illustrating a process of setting an area, on which a writing input is focused, as a preset area according to an example embodiment;
FIG. 11 is a view illustrating a method of displaying recording information according to an example embodiment;
FIGS. 12 through 14 are views illustrating a review mode according to various example embodiments;
FIG. 15 is a view illustrating a method of searching for different keywords according to an example embodiment; and
FIG. 16 is a flowchart illustrating a method of controlling an electronic blackboard apparatus according to an example embodiment.

Example embodiments are described in greater detail with reference to the accompanying drawings.

In the following description, the same drawing reference numerals are used for the same elements even in different drawings. The matters defined in the description, such as detailed construction and elements, are provided to assist in understanding of the example embodiments. Thus, it is apparent that the example embodiments can be carried out without those specifically defined matters. Also, well-known functions or constructions are not described in detail since they would obscure the example embodiments with unnecessary detail.

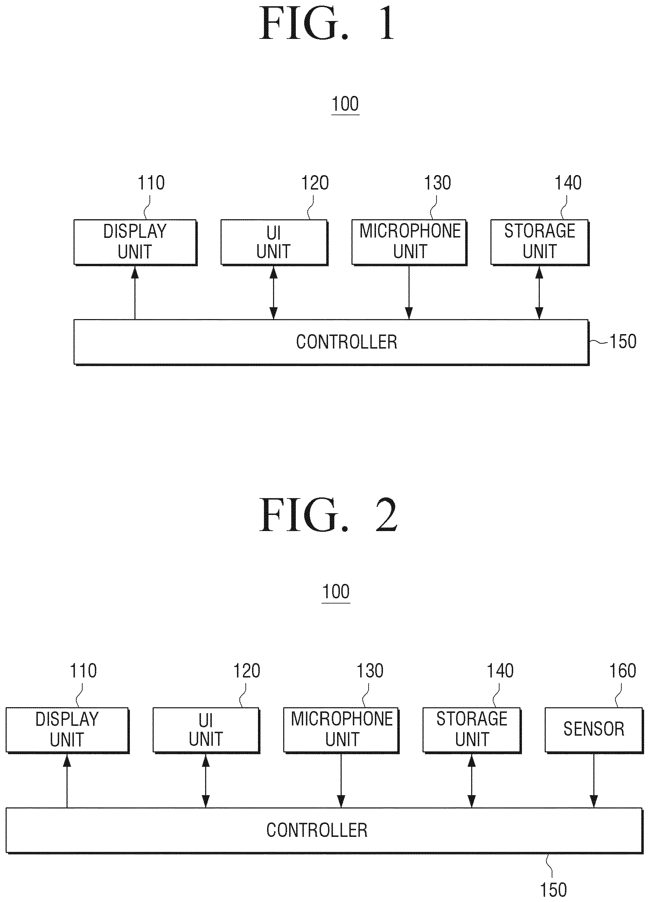

FIG. 1 is a block diagram illustrating a structure of an electronic blackboard apparatus 100 according to an example embodiment.

Referring to FIG. 1, the electronic blackboard apparatus 100 includes a display or display unit 110, a user interface (UI) or UI unit 120, a microphone or microphone unit 130, a storage or storage unit 140, and a controller 150. Here, the electronic blackboard apparatus 100 refers, for example, to a conductive blackboard on which writing is performed through, for example, an electronic pen, stylus, or the like, and which has a conductive flat surface to enable writing through the electronic pen.

The display unit 110 may display a letter, a number, or a figure according to a writing input, for example, may display a screen divided into a plurality of areas. Here, the screen divided into the plurality of areas is to be divided to store voice files respectively corresponding to the plurality of areas, and a detailed description thereof will be described later.

The UI unit 120 may receive a writing input in at least one of the plurality of areas. For example, the UI unit 120 may be realized to emit a sensed signal to be sensed by an electronic pen that touches a screen. Therefore, if writing is input by the electronic pen, the UI unit 120 may sense the writing input.

The microphone 130 may receive a voice of a user. Here, the microphone unit 130 may include at least one microphone and receive a voice signal received by a microphone installed in an external controlling apparatus.

The storage unit 140 may store the received user voice as a voice file. For example, the voice file may be stored to respectively correspond to the plurality of areas into which the screen displayed on the display unit 110 is divided.

The controller 150 may be configured to store the user voice, which is received through the microphone unit 130 when receiving the writing input in at least one of the plurality of areas into which the screen displayed on the display unit 110 is divided, as a voice file corresponding to the at least one area.

The controller 150 may also be configured to control the electronic blackboard apparatus to display a graphical user interface (GUI) corresponding to the voice file in a corresponding area according to a preset event.

The controller 150 may be configured to use time information to store the user voice, which is received through the microphone unit 130 when receiving the writing input, as a voice file corresponding to at least one area. This will be described in detail with reference to FIG. 2.

FIG. 2 is a block diagram illustrating a structure of an electronic blackboard apparatus 100 according to another example embodiment.

Referring to FIG. 2, the electronic blackboard apparatus 100 may include a display or display unit 110, a UI or UI unit 120, a microphone or microphone unit 130, a storage or storage unit 140, a controller 150, and a senor 160. The display unit 110, the UI unit 120, the microphone 130, and the storage unit 140 have been described above, and thus their detailed descriptions are omitted.

The sensor 160 may, for example, sense a writing input on a screen, and if starting of the writing input in at least one area is sensed, the controller 150 may be configured to start recording a voice. If ending of the writing input is sensed, the controller 150 may be configured to end recording of the voice and store the recorded voice as a voice file corresponding to at least one area.

For example, if an area of a blackboard is divided into areas of 2 X 3, the areas may be respectively set to (1,1), (1,2), (1,3), (2,1), (2,2), and (2,3). If a user starts writing from an area corresponding to (1,2), the controller 150 may be configured to sense that a writing input starts in the area corresponding to (1, 2) and start recording of a voice of the user from a time when the writing input starts.

If the user performs writing in the area corresponding to (1, 2) and then goes on to an area corresponding to (1, 3), i.e., a writing area is changed, the controller 150 may be configured to sense that the writing input in the area corresponding to (1, 2) is ended. Therefore, the controller 150 may be configured to end the recording of the voice of the user and store the recorded voice as a voice file corresponding to the area corresponding to (1, 2).

In other words, the controller 150 may be configured to record the voice of the user when the writing input is performed in each area and map information about a time when the writing input is performed, to the recorded voice to store the recorded voice as a voice file corresponding to each area used when the writing input is performed.

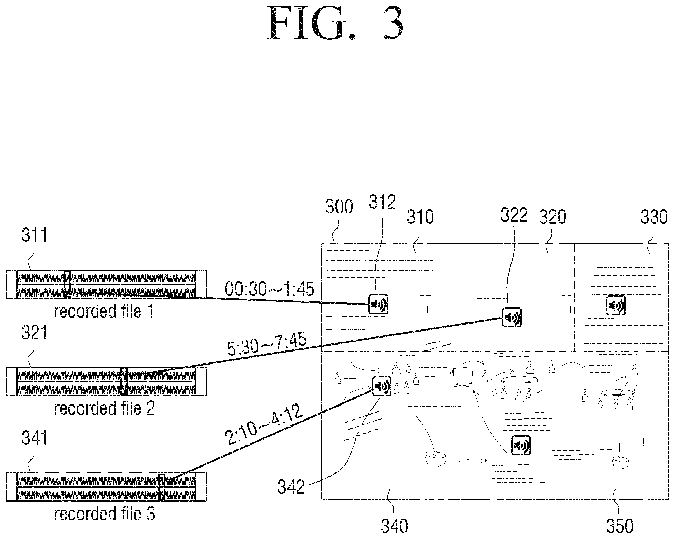

FIG. 3 is a view illustrating a relationship between a written content and a voice file according to an example embodiment.

Referring to FIG. 3, a screen 300 is displayed on the electronic blackboard apparatus 100.

The screen 300 may, for example, be divided into a plurality of areas 310, 320, 330, 340, and 350, and sizes of the plurality of areas 310, 320, 330, 340, and 350 may, for example, be changed according to settings of a user.

Writings are input into all of the plurality of areas 310, 320, 330, 340, and 350, and icons 312, 322, and 342 are respectively displayed in the plurality of areas 310, 320 and 340. Also the icons 312, 322, and 342 are respectively associated with voice files 311, 321, and 341.

For example, the controller 150 may be configured to start voice recording from a time when starting of a writing input is sensed in the area 310, end the voice recording if the ending of the writing input in the area 310 is sensed, and store a recorded voice as the voice file 311 corresponding to the area 310. As shown in FIG. 3, a time when the starting of the writing input in the area 310 is sensed is 00:30, and a time when the ending of the writing input in the area 310 is 1:45. Therefore, the controller 150 may be configured to perform voice recording for a time from 00:30 to 1:45, store a recorded voice as the voice file 311 corresponding to the area 310, and display a GUI 312 corresponding to the voice file 311 in the area 310. Therefore, the user may check a written content input into the area 310 and simultaneously click the GUI 312 to play a recorded voice file so as to check a recorded content associated with the written content.

Similarly, the controller 150 may be configured to record voices in the other areas 320 and 340, store the received voices as the voice files 321 and 341 respectively corresponding to the areas 320 and 340, and respectively display GUIs 322 and 342 respectively corresponding to the voice files 321 and 341 in the areas 320 and 340.

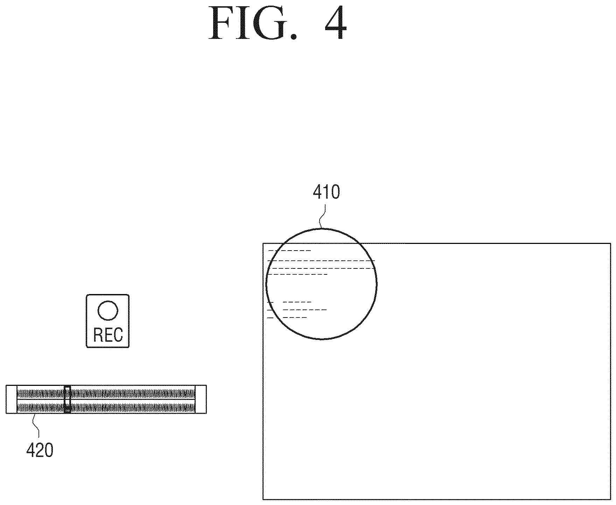

FIG. 4 is a view illustrating a relationship between a writing input and a voice file in detail according to an example embodiment.

Referring to FIG. 4, the controller 150 may be configured to store time information about an area 410 where a writing job is performed and map the stored time information and a voice file 420. In other words, the controller 150 may be configured to store time information indicating when a writing input starts in the area 410 where the writing job is performed and time information indicating when the writing input ends and map a voice file 420, which is recorded and stored from a time when the writing input starts to a time when the writing input ends, to the time information to store the voice file 420 mapped to the time information.

The controller 150 may be configured to store the voice file 420 using the time information to store the voice file 420 as the voice file 420 corresponding to the area 410 where the writing job is performed. On the other hand, the controller 150 may be configured to determine which area corresponds to the voice file 420 that is stored by using the time information mapped to the voice file 420.

The display unit 110 may display guide lines dividing a plurality of areas. This is to enable the user to perform writing in a designated area so as to enable controller 150 to divide and store voice files respectively corresponding to areas if a writing input is performed on a screen of the electronic blackboard apparatus 100.

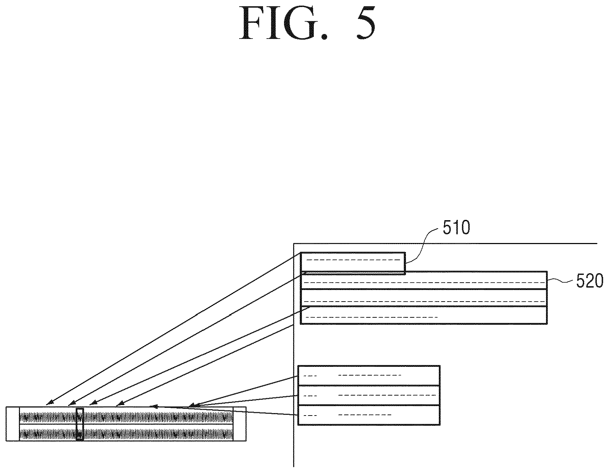

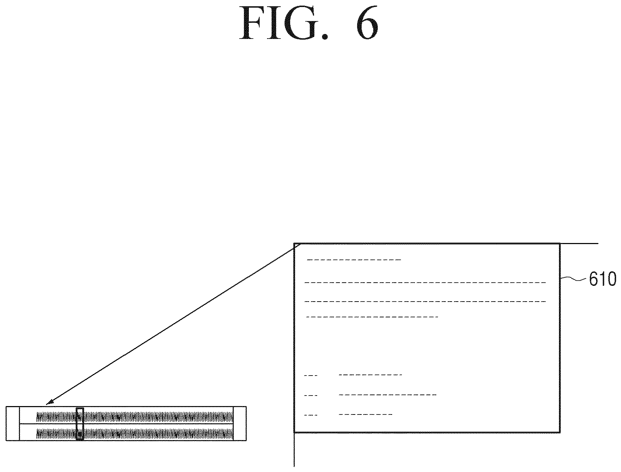

If a guide line for at least one of the plurality of areas is changed, for example, according to a user command, the controller 150 may be configured to re-divide and provide the plurality of areas so as to enable the plurality of areas to correspond to the changed guide line. This will be described with reference to FIGS. 5 and 6.

FIGS. 5 and 6 are views illustrating a change in an area size according to an example embodiment.

Referring to FIG. 5, an area into which writing is input is divided with respective lines in a horizontal direction.

In other words, the controller 150 may be configured to set the area, into which the writing is input according to a user manipulation, to be divided with the lines in the horizontal direction and store voices, which are respectively recorded in areas divided with the lines, as voice files respectively corresponding to the areas.

For example, if writing is input into an area 510 set on a first line, the controller 150 may be configured to perform voice recording from a time when starting of a writing input is sensed to a time when ending of the writing input is sensed, e.g., an input area is changed, and store the recorded voice as a voice file corresponding to the area 510 set on the first line.

When the area in which the writing is input is changed from the area 510 set on the first line to an area 520 set on a second line, the controller 150 may be configured to perform voice recording from a time when starting of the writing input is sensed to a time when ending of the writing input is sensed and store the recorded voice as a voice file corresponding to the area 520 set on the second line.

Therefore, the controller 150 may be configured to set the area, into which the writing is input according to the user manipulation, to various sizes and change a time unit when a voice is recorded according to a size of a set area.

Referring to FIG. 6, an area 610 into which writing areas divided in FIG. 5 are combined is set to a writing input area.

Similarly, the controller 150 may be configured to set an area, into which writing is input according to a user manipulation, to the area 610 without dividing the area in a horizontal direction with lines. Also, the controller 150 may be configured to perform voice recording from a time when starting of the writing input in the area 610 is sensed to a time when ending of the writing input is sensed and store the recorded voice as a voice file corresponding to the area 610.

As a result, as shown in FIGS. 5 and 6, the controller 150 may be configured to change a time unit of the voice file for which the recorded voice is stored, according to a size of a set writing input area. For example, since the area 510 of FIG. 5 is smaller than the area 610 of FIG. 6, the controller 150 may be configured to set the time unit of the voice file for which the recorded voice is stored, to be smaller.

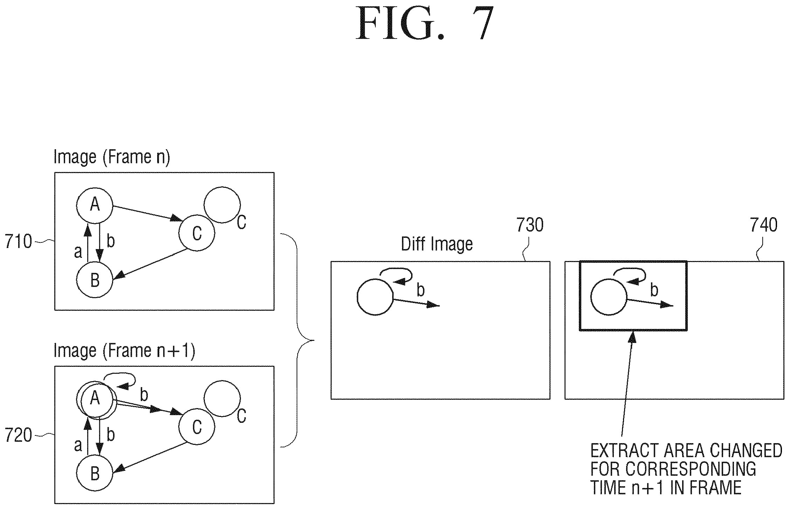

If an image writing input is received, the controller 150 may be configured to capture and store an image written at preset time intervals in frames, determine an image difference between images respectively captured in the frames, and map and store a voice corresponding to the determined image difference. This will be described in detail with reference to FIG. 7.

FIG. 7 is a view illustrating a process of storing a voice file based on a changed image according to an example embodiment.

Referring to FIG. 7, the controller 150 may be configured to map and store voice files according to areas by using a method of extracting image-based change information.

For example, the controller 150 may be configured to capture an image 710 corresponding to an nth frame, capture an image 720 corresponding to an n+1st frame, and determine a difference between captured images to extract an area in which a changed image 730 is generated.

Also, the controller 150 may be configured to store time information about the changed image 730 and store a voice mapped and recorded at the stored time information as a voice file corresponding to the changed image 730.

The controller 150 may also be configured to extract a changed image 740 based on the time information mapped to the stored voice file.

In other words, the controller 150 may be configured to store a voice, which is recorded in a time zone when the changed image 730 is generated, as a voice file corresponding to the changed image 730, and determine and provide an area where the changed image 740 is generated, based on the stored voice file.

In addition, if a user command for selecting at least some of written images is input when an image writing input is completed, the controller 150 may be configured to provide a voice file mapped on the selected at least some images.

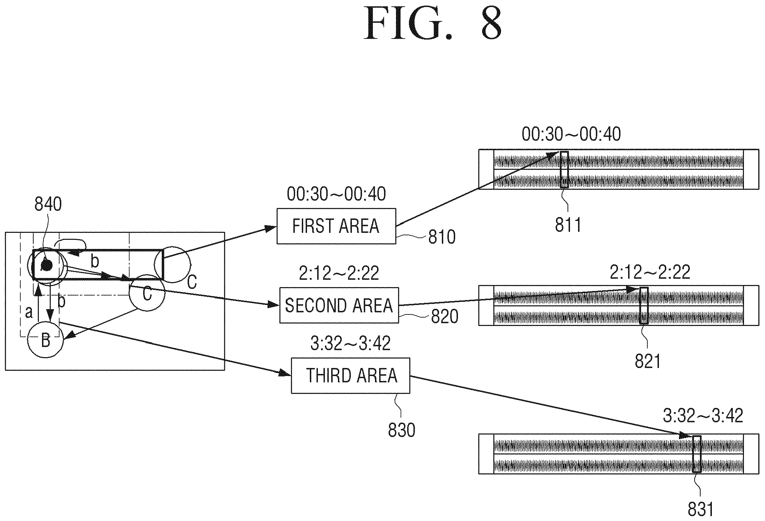

FIG. 8 is a view illustrating a process of playing a recording file corresponding to a selected area according to an example embodiment.

Referring to FIG. 8, if, for example, a user selects a desired position 840 on review when an image writing input is completed, the controller 150 may be configured to store voice files 811, 821, and 831 respectively corresponding to first, second, and third areas 810, 820, and 830 based on pieces of time information that are respectively mapped and stored in at least one of the areas including a selected position, e.g., the first, second, and third areas 810, 820, and 830.

Also, if the desired position 840 is selected according to a user manipulation, the controller 150 may be configured to provide the voice files 811, 821, and 831 respectively corresponding to at least one areas 810, 820, and 830 including the selected position 840. Therefore, the user may select a voice file corresponding to a desired one of the provided at least one areas 810, 820, and 830.

This may be applied to the following case. For example, different conversations are mostly performed by using different areas of the same image written on a screen. Therefore, an area where a desired content is written is selected from areas wherein different contents are respectively written in relation to the same image, and a voice file corresponding to the selected area is to be heard.

Also, the controller 150 may be configured to map the at least one areas 810, 820, and 830 including the selected position 840 to information about times when writing is input in the at least one areas 810, 820, and 830 to store the voice files 811, 821, and 831 corresponding to the at least one areas 810, 820, and 830.

The controller 150 may also be configured to provide a voice file corresponding to a selected area based on information about times when writing is input in the at least one areas 810, 820, and 830.

If a plurality of user voices are received through the microphone unit 130 when a writing input is received in at least one area, the controller 150 may be configured to generate voice files respectively corresponding to a plurality of users based on voice frequencies respectively corresponding to the plurality of user voices and store the voice files as voice files corresponding to at least one area.

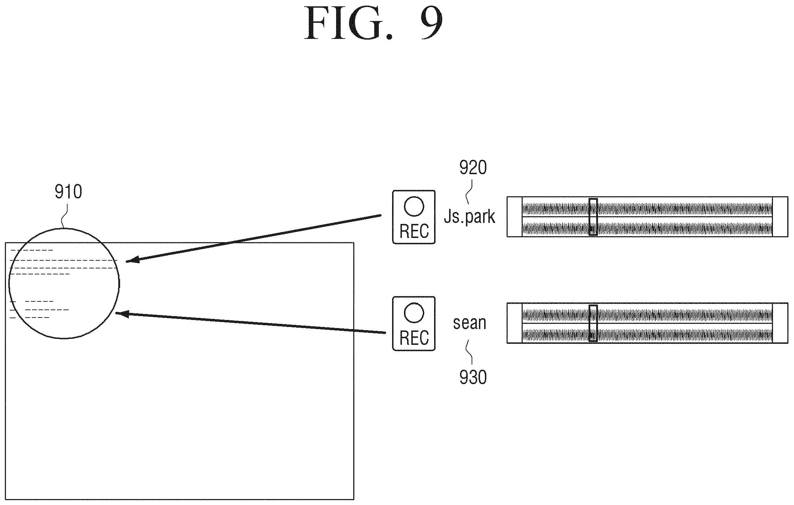

FIG. 9 is a view illustrating recorded voices of a plurality of users according to an example embodiment.

Referring to FIG. 9, if voices of a plurality of users, for example, Js.park 920 and sean 930 are simultaneously or sequentially received in an area 910 where writing is input, the controller 150 may be configured to generate voice files respectively corresponding to the plurality of users Js.park 920 and sean 930 based on voice frequencies respectively corresponding to the plurality of users Js.park 920 and sean 930 and store the voice files so as to enable the voice files to correspond to the area 910 where the writing is input.

Also, for example, with respect to a user voice received through the microphone unit 130 of the electronic blackboard apparatus 100 and a user voice received through a microphone of a remote controller or a pointing device used by each user, the controller 150 may be configured to generate a voice file corresponding to each user based on a voice frequency of each user and store the voice file so as to enable the voice file to correspond to the area 910 where the writing is input.

The controller 150 may be configured to set an area, on which a writing input is focused, to a preset area and store a user voice, which is received through a microphone unit when the writing input is received, as a voice file corresponding to the preset area.

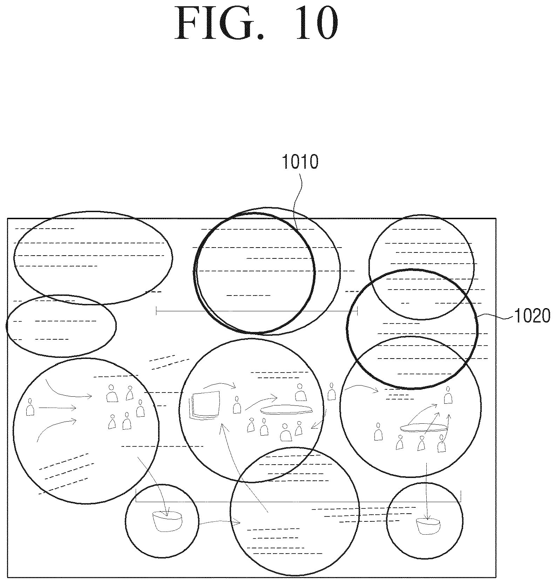

FIG. 10 is a view illustrating a process of setting an area, on which a writing input is focused, to a preset area according to an example embodiment.

Referring to FIG. 10, the controller 150 may be configured to determine areas 1010 and 1020, on which writing inputs are focused, e.g., preset areas, based on whether a touch event of one of a plurality of areas having screens, on which writing inputs are performed, occurs, for example, a number of times higher than or equal to a preset numerical value.

Also, the controller 150 may be configured to map the areas 1010 and 1020, on which the writing inputs are focused, to information (e.g., information about times when the writing inputs start in corresponding areas to times when the writing inputs end in the corresponding areas, etc.) about times when the writing inputs are respectively performed in the areas 1010 and 1020 and store voices, which are recorded for the times, as voice files.

The controller 150 may be configured to divide and display voices of users, which are respectively recorded in areas in which writing inputs are performed, according to speakers and times.

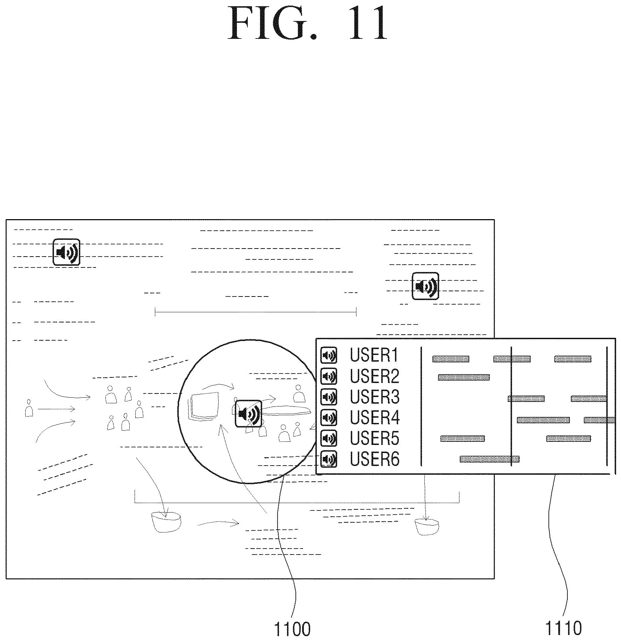

FIG. 11 is a view illustrating a method of displaying recording information according to an example embodiment.

Referring to FIG. 11, the controller 150 may be configured to divide and display GUIs corresponding to voice files, which are recorded and stored with respect to an area 1100 in which a writing input is performed, and user voices which are recorded in area 1110, according to speakers (e.g., users 1, 2, 3, 4, 5, and 6) and time intervals.

Therefore, a user may check which user speaks what kind of content at what time point, for a time when a writing input is performed.

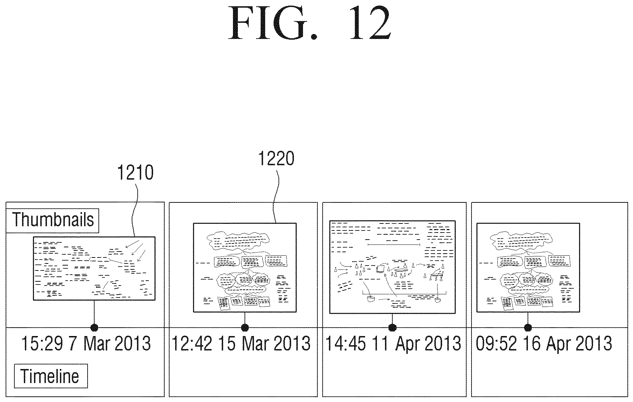

FIGS. 12 through 14 are views illustrating a review mode according to various example embodiments.

The controller 150 may be configured to change and provide a screen page according to a preset event. In other words, the controller 150 may be configured to integrate voice files respectively corresponding to a plurality of areas of a first screen page into a first voice file, and map and store the first voice file on a content written on the first screen page. Also, the controller 150 may be configured to integrate voice files respectively corresponding to a plurality of areas of a second screen page into a second voice, and map and store the second voice file on a content written in the second screen page.

For example, referring to FIG. 12, the controller 150 may be configured to store writing inputs, which are performed on a screen of the electronic blackboard apparatus 100, and recorded voice files as one file according, for example, to times or dates.

For example, the controller 150 may be configured to change a screen page according to a user manipulation of changing a screen. In other words, if a writing input and voice recording are completed on a first screen page 1210, the controller 150 may be configured to change the first screen page 1210 into a second screen page 1220 that is a new page, to re-perform writing input and voice recording functions.

Also, the controller 150 may be configured to store writing inputs, which are respectively performed in a plurality of areas of the first screen page 1210, integrate voice files, which are recorded and stored form a time when the writing inputs are respectively performed in the plurality of areas, and map and store the integrated voice file to the first screen page 1210.

Similarly, the controller 150 may be configured to store writing inputs, which are respectively performed in a plurality of areas of the second screen page 1220, integrate voice files, which are recorded and stored for a time when the writing inputs are respectively performed in the plurality of areas, and map and store the integrated voice file to the screen page 1220.

The controller 150 may also be configured to provide contents written on the first and second screen pages 1210 and 1220 in thumbnail forms on a timeline according to a preset event. Also, the controller 150 may be configured to display a screen page corresponding to a selected thumbnail as a whole screen and provide integrated voice file information corresponding to a displayed screen page.

Referring to FIG. 12, the controller 150 may be configured to provide the first and second screen pages 1210 and 1220 in thumbnail forms according to a corresponding date and time on the timeline.

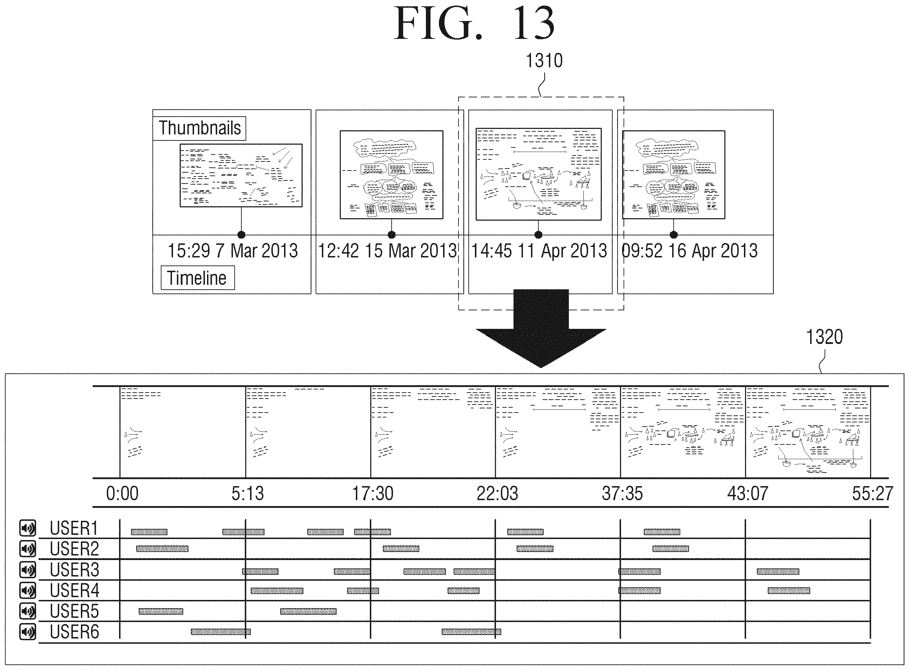

Referring to FIG. 13, if a thumbnail 1310 is selected, for example, based on a user manipulation, the controller 150 may be configured to display a screen page 1320 corresponding to the selected thumbnail 1310 as a whole screen. Here, a screen page 1320 displayed as the whole screen may include all processes of changing written images according to times on a corresponding date and display information about voice files recorded according to speakers and times.

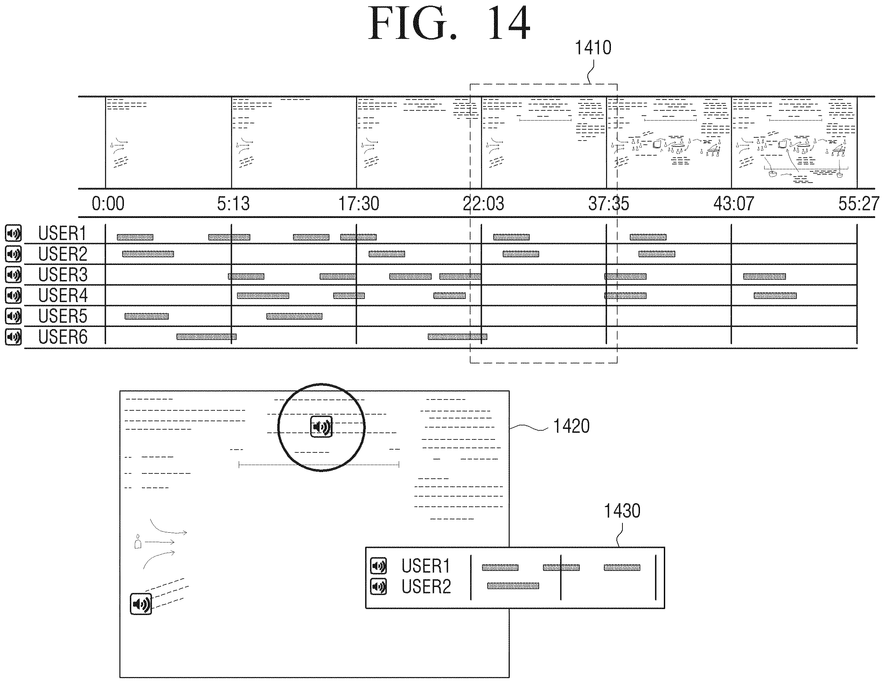

Referring to FIG. 14, the screen page 1320 described with reference to FIG. 13 is displayed as a whole screen. If a thumbnail 1410 in a time zone is selected from a plurality of thumbnails of the screen page 1320 displayed as the whole screen based on, for example, a user manipulation, the controller 150 may be configured to provide a written content 1420 corresponding to the selected thumbnail 1410 and voice file information 1430 corresponding to the written content 1420.

For example, the voice file information 1430 corresponding to the written content 1420 may refer to information about voice files, which are recorded according to speakers and times for a preset time selected based on, for example, a user manipulation.

The controller 150 may be configured to extract at least one keyword from a written content and a voice file corresponding to the written content, generate a search tag based on the keyword, and map and store the search tag to the written content and the voice file corresponding to the written content.

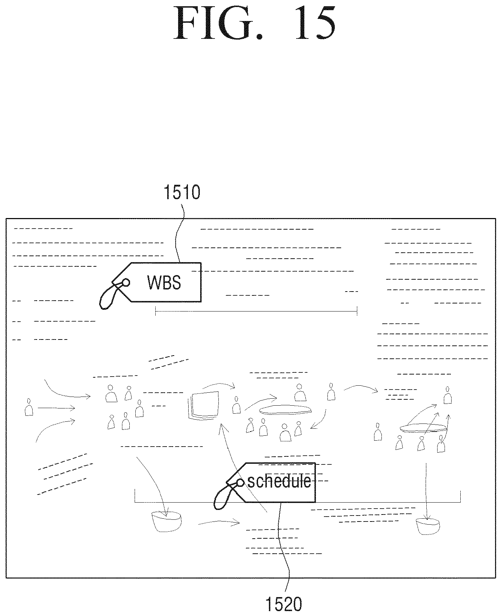

FIG. 15 is a view illustrating a method of searching for different keywords according to an example embodiment.

Referring to FIG. 15, the controller 150 may be configured to recognize a content written on a screen onto which writing is input to extract keywords and use the content as reference data based on the extracted keywords in search. The controller 150 may be configured to generate search tags 1510 and 1520 based on the extracted keyword, and map and store the search tags 1510 and 1520 to the content.

For example, the controller 150 may be configured to recognize a content associated with a Work Breakdown Structure (WBS) or a schedule in the written content to extract keywords, generate the search tags 1510 and 1520 based on the extracted keywords, and map and store the search tags 1510 1520 to the written content.

Also, the controller 150 may be configured to extract a keyword from at least one of the voice files corresponding to written contents displayed in a plurality of areas divided on a screen onto which writing is input, generate a search tag based on the extracted keyword, and map and store the search tag to a voice file corresponding to the written contents.

Therefore, the controller 150 may be configured to search for a written content, a written content including a desired keyword of a voice file corresponding to the written content, and a voice file corresponding to the written content.

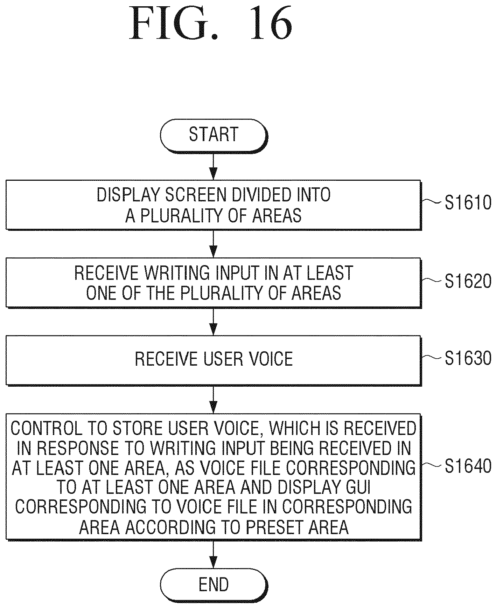

FIG. 16 is a flowchart illustrating a method of controlling an electronic blackboard apparatus according to an example embodiment.

Referring to FIG. 16, in operation S1610, the electronic blackboard apparatus displays a screen divided into a plurality of areas.

In operation S1620, the electronic blackboard apparatus receives a writing input in at least one of the plurality of areas.

In operation S1630, the electronic blackboard apparatus receives a user voice.

In operation S1640, the electronic blackboard apparatus stores the user voice, which is received when the writing input is received in the at least one, as a voice file corresponding to the at least one area and displays a GUI corresponding to the voice file in a corresponding area according to a preset event.

The method of controlling the electronic blackboard apparatus according to the example embodiment further includes sensing a writing input on the screen.

In operation S1640, if starting of the writing input in the at least one area is sensed, voice recording may start, if ending of the writing input is sensed, the voice recording may end, and a recorded voice may be stored as a voice file corresponding to the at least one area.

Also, in operation S1610, guide lines that divide the screen into the plurality of areas may be displayed. In operation S1640, if a guide line for at least one of the plurality of areas is changed based on, for example, a user command, the plurality of areas may be re-divided and provided so as to correspond to the changed guide line.

Also, in operation S1640, if an image writing input is received, an image written at preset time intervals may be captured and stored as frames, an image difference between images respectively captured in the frames may be determined, and a voice file corresponding to the determined image difference may be mapped and stored.

In addition, in operation S1640, if a user command for selecting at least some of the written images is input when an image writing input is completed, voice files mapped to the selected at least some images may be provided.

In operation S1640, if a plurality of user voices are received when a writing input in at least one area is received, voice files respectively corresponding to a plurality of users may be generated based on voice frequencies respectively corresponding to the plurality of user voices to be stored as a voice file corresponding to the at least one area.

Also, in operation S1640, an area on which a writing input is focused may be set to a preset area, and a user voice received when the writing input is received may be stored as a voice file corresponding to the preset area.

The method of controlling electronic blackboard apparatus according to the example embodiment may further include: changing and providing a screen page according to a preset event, integrating voice files respectively corresponding to a plurality of areas of a first screen page into a first voice file, mapping and storing the first voice file to a content written on the first screen page, integrating voice files respectively corresponding to a plurality of areas of a second screen page into a second voice file, and mapping and storing the second voice file to a content written on the second screen page.

In operation S1640 of storing the user voice, contents written on the first and second screen pages may be provided in thumbnail forms on a timeline according to a preset event, a screen page corresponding to a selected thumbnail may be displayed as a whole screen, and integrated voice file information corresponding to the displayed screen page may be provided.

The method may further include: extracting at least one keyword from a written content and a voice file corresponding to the written content, generating a search tag based on the extracted keyword, and mapping and storing the search tag to the written content and the voice file corresponding to the written content.

There may be provided a non-transitory computer-readable medium that stores a program sequentially performing a controlling method according to the present general inventive concept.

For example, there may be provided a non-transitory computer-readable medium that stores a program performing, for example: displaying a screen divided into a plurality of areas; receiving a writing input in at least one of the plurality of areas; receiving a user voice; and controlling to store the user voice received when the writing input in the at least one is received as a voice file corresponding to the at least one area and display a GUI corresponding to the voice file in a corresponding area according to a preset event.

The non-transitory computer-readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

Also, a bus is not illustrated in the above-described block diagrams illustrating an electronic blackboard apparatus, but communications between elements of the electronic blackboard apparatus may be performed through the bus. Also, each device may further include a processor such as a central processing unit (CPU), a microprocessor, or the like performing the above-described various operations. As will be appreciated by those skilled in the art, the described systems, methods and techniques may be implemented in digital electronic circuitry including, for example, electrical circuitry, logic circuitry, hardware, computer hardware, firmware, software, or any combinations of these elements. Apparatus embodying these techniques may include appropriate input and output devices, a computer processor, and a computer program product tangibly embodied in a non-transitory machine-readable storage device or medium for execution by a programmable processor. A process embodying these techniques may be performed by a programmable hardware processor executing a suitable program of instructions to perform desired functions by operating on input data and generating appropriate output. The techniques may be implemented in one or more computer programs that are executable on a programmable processing system including at least one programmable processor coupled to receive data and instructions from, and transmit data and instructions to, a data storage system, at least one input device, and at least one output device. Each computer program may be implemented in a high-level procedural or object-oriented programming language or in assembly or machine language, if desired; and in any case, the language may be compiled or interpreted language. Suitable processors include, by way of example, both general and special purpose microprocessors. Generally, a processor will receive instructions and data from a rea-only memory and/or a random access memory. Non-transitory storage devices suitable for tangibly embodying computer program instructions and data include all forms of computer memory including, but not limited to, non-volatile memory, including by way of example, semiconductor memory devices, such as Erasable Programmable Read-Only Memory (EPROM), Electrically Erasable Programmable Read-Only Memory (EEPROM), and flash memory devices; magnetic disks, such as internal hard disks and removable disks; magneto-optical disks; Compact Disc Read-Only Memory (CD-ROM), digital versatile disk (DVD), Blu-ray disk, universal serial bus (USB) device, memory card, or the like. Any of the foregoing may be supplemented by, or incorporated in, specially designed hardware or circuitry including, for example, application-specific integrated circuits (ASICs) and digital electronic circuitry. Thus, methods for providing image contents described above may be implemented by a program including an executable algorithm that may be executed in a computer, and the program may be stored and provided in a non-transitory computer readable medium.

The foregoing example embodiments and advantages are merely illustrative and are not to be construed as limiting: many alternatives, modifications, and variations will be apparent to those skilled in the art.. The disclosure can be readily applied to other types of apparatuses. Also, the description of the example embodiments is intended to be illustrative, and not to limit the scope of the invention as defined by the claims.

## Claims

1. An electronic blackboard apparatus comprising:
a display (not) configured to display a screen (300) divided into a plurality of areas (310, 320, 340, 350, 410, 510, 520, 610, 810, 820, 830, 910,1010,1020,1100);
a user interface (UI) (120) configured to receive writing input in each of the plurality of areas;
a microphone (130) configured to receive a user voice;
a storage (140) configured to store the received user voice as a voice file (311, 321, 341, 420, 811, 821, 831); and **characterized in that** a controller (150) is configured to control the electronic blackboard apparatus, in response to a writing input being received in a first area of the plurality of areas, to store a user voice received through the microphone as a first voice file corresponding to the first area, and, in response to a writing input being received in a second area, to store a user voice received through the microphone as a second voice file corresponding to the second area, and wherein the controller controls the electronic blackboard apparatus to display a graphical user interface GUI (312, 322, 342) corresponding to each respective voice file in its corresponding area of the screen.

2. The electronic blackboard apparatus of claim 1, further comprising:
a sensor (160) configured to sense the writing input on the screen,
wherein the controller is configured to start voice recording in response to a start of the writing input being sensed in at least one area, to end the voice recording in response to an end of the writing input being sensed, and to store a recorded voice as a voice file corresponding to the respective area in said storage.

3. The electronic blackboard apparatus of claim 1 or 2, wherein the display unit displays guide lines dividing the plurality of areas,
wherein the controller is configured to re-divide and provide the plurality of areas corresponding to the changed guide line in response to a guide line for at least one of the plurality of areas, being changed according to a user command.

4. The electronic blackboard apparatus of any one of claims 1 to 3, wherein the controller is configured to capture and store an image (710, 720, 730, 740), which is written at preset time intervals in frames, to determine an image difference between images respectively captured in the frames, and to map and store a voice file corresponding to the determined image difference in response to an image writing input being received.

5. The electronic blackboard apparatus of claim 4, wherein the controller is configured to provide a voice file mapped to the selected images in response to a user command being input to select at least some of written images in response to the image writing input being completed.

6. The electronic blackboard apparatus of any one of claims 1 to 5, wherein the controller is configured to generate voice files respectively corresponding to the plurality of users based on voice frequencies respectively corresponding to the plurality of user voices and to store the voice files as a voice file corresponding to a respective area in response to a plurality of user voices being received through the microphone in response to the writing input being received in the corresponding area.

7. The electronic blackboard apparatus of any one of claims 1 to 6, wherein the controller is configured to set an area, on which the writing input is focused, to a preset area and to store a user voice, which is received through the microphone in response to the writing input being received, as a voice file corresponding to the preset area.

8. The electronic blackboard apparatus of any one of claims 1 to 7, wherein the controller is configured to change and provide a screen page based on a preset event, to integrate voice files respectively corresponding to a plurality of areas of a first screen page into a first voice file, to map and store the first voice file to a content written on the first screen page, to integrate voice files respectively corresponding to a plurality of areas of a second screen page into a second voice file, and to map and store the second voice file to a content written on the second screen page.

9. The electronic blackboard apparatus of claim 8, wherein the controller is configured to provide the contents written on the first and second screen pages in thumbnail form on a timeline based on a preset event, to display a screen page corresponding to a selected thumbnail as a whole screen, and to provide integrated voice file information corresponding to the displayed screen page.

10. The electronic blackboard apparatus of any one of claims 1 to 9, wherein the controller is configured to extract a keyword from at least one of a written content and a voice file corresponding to the written content, to generate a search tag based on the keyword, and to map and store the search tag to the written content and the voice file corresponding to the written content.

11. A method of controlling an electronic blackboard apparatus, the method comprising:
displaying a screen divided into a plurality of areas (S1610);
receiving writing input in at least first and second areas of the plurality of areas (S1620);
receiving a voice (S1630); and **characterized by** controlling the electronic blackboard apparatus to store a voice which is received in response to a writing input being received in a first area of the plurality of areas, as a first voice file corresponding to the first area, and to store a voice which is received in response to a writing input being received in a second area as a second voice file corresponding to the second area, and controlling the electronic blackboard apparatus to display a graphical user interface (GUI) corresponding to each respective voice file in its corresponding area of the screen (S1640).

12. The method of claim 11, further comprising:
sensing a writing input on the screen,
wherein the controlling further comprises: starting voice recording in response to a start of a writing input being sensed in at least one area, ending the voice recording in response to an end of the writing input being sensed, and storing a recorded voice as a voice file corresponding to the respective area.

13. The method of claim 11 or 12, wherein:
the displaying further comprises: displaying guide lines dividing the plurality of areas; and
the controlling further comprises: re-dividing and providing the plurality of areas to correspond to the changed guide line in response to a guide line for at least one of the plurality of areas, being changed based on a user command.

14. The method of any one of claims 11 to 13, wherein the controlling further comprises:
capturing and storing an image written at preset time intervals in frames, determining an image difference between images respectively captured in the frames, and mapping and storing a voice file corresponding to the determined image difference in response to an image writing input being received.

15. The method of claim 14, wherein the controlling further comprises:
providing voice files mapped to the selected images in response to a command to select at least some of written images in response to the image writing input being completed.

## Patentansprüche

1. Elektronische Wandtafelvorrichtung, umfassend:
eine Anzeige (110), die zum Anzeigen eines in mehrere Bereiche (310, 320, 340, 350, 410, 510, 520, 610, 810, 820, 830, 910, 1010, 1020, 1100) unterteilten Bildschirms (300) konfiguriert ist;
eine Benutzerschnittstelle (UI) (120), die zum Empfangen einer Schreibeingabe in jedem der mehreren Bereiche konfiguriert ist;
ein Mikrofon (130), das zum Empfangen einer Sprache eines Benutzers konfiguriert ist;
einen Speicher (140), der zum Speichern der empfangenen Sprache eines Benutzers als eine Sprachdatei (311, 321, 341, 420, 811, 821, 831) konfiguriert ist; und
**dadurch gekennzeichnet, dass** ein Controller (150) zum Steuern der elektronischen Wandtafelvorrichtung als Reaktion auf den Empfang einer Schreibeingabe in einem ersten Bereich der mehreren Bereiche, zum Speichern einer durch das Mikrofon empfangenen Sprache eines Benutzers als eine dem ersten Bereich entsprechende erste Sprachdatei und zum Speichern einer durch das Mikrofon empfangenen Sprache eines Benutzers als Reaktion auf den Empfang einer Schreibeingabe in einem zweiten Bereich als eine dem zweiten Bereich entsprechende zweite Sprachdatei konfiguriert ist und wobei der Controller die elektronische Wandtafelvorrichtung zum Anzeigen einer jeder jeweiligen Sprachdatei in ihrem entsprechenden Bereich des Bildschirms entsprechenden grafischen Benutzeroberfläche (GUI) (312, 322, 342) steuert.

2. Elektronische Wandtafelvorrichtung nach Anspruch 1, die ferner Folgendes aufweist:
einen Sensor (160), der zum Erfassen der Schreibeingabe auf dem Bildschirm konfiguriert ist,
wobei der Controller zum Starten einer Sprachaufzeichnung als Reaktion auf das Erfassen eines Starts der Schreibeingabe in wenigstens einem Bereich, zum Beenden der Sprachaufzeichnung als Reaktion auf das Erfassen eines Endes der Schreibeingabe und zum Speichern einer aufgezeichneten Sprache als eine dem jeweiligen Bereich in dem genannten Speicher entsprechende Sprachdatei konfiguriert ist.

3. Elektronische Wandtafelvorrichtung nach Anspruch 1 oder 2, wobei die Anzeigeeinheit die mehreren Bereiche unterteilende Führungslinien anzeigt,
wobei der Controller zum Neu-Unterteilen und Bereitstellen der der geänderten Führungslinie entsprechenden mehreren Bereiche als Reaktion darauf, dass eine Führungslinie für wenigstens einen der mehreren Bereiche gemäß einem Benutzerbefehl geändert wird, konfiguriert ist.

4. Elektronische Wandtafelvorrichtung nach einem der Ansprüche 1 bis 3, wobei der Controller zum Erfassen und Speichern eines Bilds (710, 720, 730, 740), das in voreingestellten Zeitintervallen in Einzelbildern geschrieben wird, zum Bestimmen eines Bildunterschieds zwischen jeweils in den Einzelbildern erfassten Bildern und zum Zuordnen und Speichern einer Sprachdatei, die dem bestimmten Bildunterschied entspricht, als Reaktion auf den Empfang einer Bildschreibeingabe konfiguriert ist.

5. Elektronische Wandtafelvorrichtung nach Anspruch 4, wobei der Controller zum Bereitstellen einer Sprachdatei, die den ausgewählten Bildern zugeordnet ist, als Reaktion auf die Eingabe eines Benutzerbefehls zum Auswählen von wenigstens einigen geschriebenen Bildern als Reaktion auf den Abschluss der Bildschreibeingabe konfiguriert ist.

6. Elektronische Wandtafelvorrichtung nach einem der Ansprüche 1 bis 5, wobei der Controller zum Generieren von Sprachdateien, die jeweils den mehreren Benutzern entsprechen, auf Basis von Sprachfrequenzen, die jeweils den mehreren Benutzersprachen entsprechen, und zum Speichern der Sprachdateien als eine Sprachdatei, die einem jeweiligen Bereich entspricht, als Reaktion auf den Empfang mehrerer Benutzersprache durch das Mikrofon als Reaktion auf den Empfang der Schreibeingabe in dem entsprechenden Bereich konfiguriert ist.

7. Elektronische Wandtafelvorrichtung nach einem der Ansprüche 1 bis 6, wobei der Controller zum Setzen eines Bereichs, auf den sich die Schreibeingabe konzentriert, auf einen voreingestellten Bereich und zum Speichern einer durch dass Mikrofon empfangenen Benutzersprache als Reaktion auf den Empfang der Schreibeingabe als eine dem voreingestellten Bereich entsprechende Sprachdatei konfiguriert ist.

8. Elektronische Wandtafelvorrichtung nach einem der Ansprüche 1 bis 7, wobei der Controller zum Ändern und Bereitstellen einer Bildschirmseite auf Basis eines voreingestellten Ereignisses, zum Integrieren von Sprachdateien, die jeweils mehreren Bereichen einer ersten Bildschirmseite entsprechen, in eine erste Sprachdatei, zum Zuordnen und Speichern der ersten Sprachdatei zu/in einem auf der ersten Bildschirmseite geschriebenen Inhalt, zum Integrieren von Sprachdateien, die jeweils mehreren Bereichen einer zweiten Bildschirmseite entsprechen, in eine zweite Sprachdatei und zum Zuordnen und Speichern der zweiten Sprachdatei zu/in einem auf der zweiten Bildschirmseite geschriebenen Inhalt konfiguriert ist.

9. Elektronische Wandtafelvorrichtung nach Anspruch 8, wobei der Controller zum Bereitstellen der auf der ersten und der zweiten Bildschirmseite geschriebenen Inhalte in Vorschaubildform auf einer Zeitlinie auf Basis eines voreingestellten Ereignisses, zum Anzeigen einer Bildschirmseite, die einem ausgewählten Vorschaubild entspricht, als einen ganzen Bildschirm und zum Bereitstellen integrierter Sprachdateiinformationen, die der angezeigten Bildschirmseite entsprechen, konfiguriert ist.

10. Elektronische Wandtafelvorrichtung nach einem der Ansprüche 1 bis 9, wobei der Controller zum Extrahieren eines Schlüsselworts aus wenigstens einem von einem geschriebenen Inhalt und einer dem geschriebenen Inhalt entsprechenden Sprachdatei, zum Generieren eines Such-Tags auf Basis des Schlüsselworts und zum Zuordnen und Speichern des Such-Tags zu/in dem geschriebenen Inhalt und der dem geschriebenen Inhalt entsprechenden Sprachdatei konfiguriert ist.

11. Verfahren zum Steuern einer elektronischen Wandtafelvorrichtung, wobei das Verfahren Folgendes aufweist:
Anzeigen eines in mehrere Bereiche unterteilten Bildschirms (S1610);
Empfangen einer Schreibeingabe in wenigstens einem ersten und einem zweiten Bereich der mehreren Bereiche (51620) ;
Empfangen einer Sprache (S1630); und
**gekennzeichnet durch**
Steuern der elektronischen Wandtafelvorrichtung zum Speichern einer Sprache, die als Reaktion auf den Empfang einer Schreibeingabe in einem ersten Bereich der mehreren Bereiche empfangen wird, als eine dem ersten Bereich entsprechende erste Sprachdatei und zum Speichern einer Sprache, die als Reaktion auf den Empfang einer Schreibeingabe in einem zweiten Bereich empfangen wird, als eine dem zweiten Bereich entsprechende zweite Sprachdatei und Steuern der elektronischen Wandtafelvorrichtung zum Anzeigen einer grafischen Benutzeroberfläche (GUI), die jeder jeweiligen Sprachdatei in ihrem entsprechenden Bereich des Bildschirms entspricht (S1640).

12. Verfahren nach Anspruch 11, das ferner Folgendes aufweist:
Erfassen einer Schreibeingabe auf dem Bildschirm,
wobei das Steuern ferner Folgendes aufweist: Starten einer Sprachaufzeichnung als Reaktion auf das Erfassen eines Starts der Schreibeingabe in wenigstens einem Bereich, Beenden der Sprachaufzeichnung als Reaktion auf das Erfassen eines Endes der Schreibeingabe und Speichern einer aufgezeichneten Sprache als eine dem jeweiligen Bereich entsprechende Sprachdatei.

13. Verfahren nach Anspruch 11 oder 12, wobei:
das Anzeigen ferner Folgendes aufweist: Anzeigen von die mehreren Bereiche unterteilenden Führungslinien; und
das Steuern ferner Folgendes aufweist: Neu-Unterteilen und Bereitstellen der mehreren Bereiche entsprechend der geänderten Führungslinie als Reaktion darauf, dass eine Führungslinie für wenigstens einen der mehreren Bereiche gemäß einem Benutzerbefehl geändert wird.

14. Verfahren nach einem der Ansprüche 11 bis 13, wobei das Steuern ferner Folgendes aufweist:
Erfassen und Speichern eines Bilds, das in voreingestellten Zeitintervallen in Einzelbildern geschrieben wird, Bestimmen eines Bildunterschieds zwischen jeweils in den Einzelbildern erfassten Bildern und Zuordnen und Speichern einer Sprachdatei, die dem bestimmten Bildunterschied entspricht, als Reaktion auf den Empfang einer Bildschreibeingabe.

15. Verfahren nach Anspruch 14, wobei das Steuern ferner Folgendes aufweist:
Bereitstellen von Sprachdateien, die den ausgewählten Bildern zugeordnet sind, als Reaktion auf den Befehl zum Auswählen von wenigstens einigen geschriebenen Bildern als Reaktion auf den Abschluss der Bildschreibeingabe.

## Revendications

1. Dispositif à tableau électronique comportant :
un affichage (110) configuré pour afficher un écran (300) divisé en une pluralité de zones (310, 320, 340, 350, 410, 510, 520, 610, 810, 820, 830, 910, 1010, 1020, 1100) ;
une interface utilisateur (IU) (120) configurée pour recevoir une entrée d'écriture dans chacune de la pluralité de zones ;
un microphone (130) configuré pour recevoir une voix d'utilisateur ;
une mémoire de stockage (140) configurée pour stocker la voix d'utilisateur reçue sous forme d'un fichier vocal (311, 321, 341, 420, 811, 821, 831) ; et
**caractérisé en ce qu'**un dispositif de commande (150) est configuré pour commander le dispositif à tableau électronique, en réponse à une entrée d'écriture qui est reçue dans une première zone de la pluralité de zones, pour stocker une voix d'utilisateur reçue par le biais du microphone sous forme d'un premier fichier vocal correspondant à la première zone, et, en réponse à une entrée d'écriture qui est reçue dans une deuxième zone, pour stocker une voix d'utilisateur reçue par le biais du microphone sous forme d'un deuxième fichier vocal correspondant à la deuxième zone, et dans lequel le dispositif de commande permet de commander le dispositif à tableau électronique à des fins d'affichage d'une interface utilisateur graphique (IUG) (312, 322, 342) correspondant à chaque fichier vocal respectif dans sa zone correspondante de l'écran.

2. Dispositif à tableau électronique selon la revendication 1, comportant par ailleurs :
un capteur (160) configuré pour détecter l'entrée d'écriture sur l'écran,
dans lequel le dispositif de commande est configuré pour démarrer un enregistrement vocal en réponse à la détection d'un début de l'entrée d'écriture dans au moins une zone, pour mettre fin à l'enregistrement vocal en réponse à la détection d'une fin de l'entrée d'écriture, et pour stocker une voix enregistrée sous forme d'un fichier vocal correspondant à la zone respective dans ladite mémoire de stockage.

3. Dispositif à tableau électronique selon la revendication 1 ou la revendication 2, dans lequel l'unité d'affichage affiche des lignes de guidage qui divisent la pluralité de zones,
dans lequel le dispositif de commande est configuré pour re-diviser et fournir la pluralité de zones correspondant à la ligne de guidage changée en réponse à une ligne de guidage pour au moins l'une de la pluralité de zones, qui est changée en fonction d'une commande d'utilisateur.

4. Dispositif à tableau électronique selon l'une quelconque des revendications 1 à 3, dans lequel le dispositif de commande est configuré pour capturer et stocker une image (710, 720, 730, 740), qui est écrite selon des intervalles de temps préréglés dans des trames, pour déterminer une différence d'images entre des images capturées respectivement dans les trames, et pour mapper et stocker un fichier vocal correspondant à la différence d'images déterminée en réponse à une entrée d'écriture d'image qui est reçue.

5. Dispositif à tableau électronique selon la revendication 4, dans lequel le dispositif de commande est configuré pour fournir un fichier vocal mappé aux images sélectionnées en réponse à une commande d'utilisateur qui est entrée pour sélectionner au moins une partie des images écrites en réponse à l'entrée d'écriture d'image qui est achevée.

6. Dispositif à tableau électronique selon l'une quelconque des revendications 1 à 5, dans lequel le dispositif de commande est configuré pour générer des fichiers vocaux correspondant respectivement à la pluralité d'utilisateurs en fonction de fréquences vocales correspondant respectivement à la pluralité de voix d'utilisateurs et pour stocker les fichiers vocaux sous forme d'un fichier vocal correspondant à une zone respective en réponse à une pluralité de voix d'utilisateurs qui sont reçues par le biais du microphone en réponse à l'entrée d'écriture qui est reçue dans la zone correspondante.

7. Dispositif à tableau électronique selon l'une quelconque des revendications 1 à 6, dans lequel le dispositif de commande est configuré pour régler une zone, sur laquelle l'entrée d'écriture est concentrée, selon une zone préréglée et pour stocker une voix d'utilisateur, qui est reçue par le biais du microphone en réponse à l'entrée d'écriture qui est reçue, sous forme d'un fichier vocal correspondant à la zone préréglée.

8. Dispositif à tableau électronique selon l'une quelconque des revendications 1 à 7, dans lequel le dispositif de commande est configuré pour changer et fournir une page d'écran en fonction d'un événement préréglé, pour intégrer des fichiers vocaux correspondant respectivement à une pluralité de zones d'une première page d'écran dans un premier fichier vocal, pour mapper et stocker le premier fichier vocal dans un contenu écrit sur la première page d'écran, pour intégrer des fichiers vocaux correspondant respectivement à une pluralité de zones d'une deuxième page d'écran dans un deuxième fichier vocal, et pour mapper et stocker le deuxième fichier vocal dans un contenu écrit sur la deuxième page d'écran.

9. Dispositif à tableau électronique selon la revendication 8, dans lequel le dispositif de commande est configuré pour fournir les contenus écrits sur les première et deuxième pages d'écran sous forme de vignettes sur une ligne chronologique en fonction d'un événement préréglé, pour afficher une page d'écran correspondant à une vignette sélectionnée sous forme d'un écran complet, et pour fournir des informations se rapportant au fichier vocal intégré correspondant à la page d'écran affichée.

10. Dispositif à tableau électronique selon l'une quelconque des revendications 1 à 9, dans lequel le dispositif de commande est configuré pour extraire un mot-clé en provenance d'au moins l'un parmi un contenu écrit et un fichier vocal correspondant au contenu écrit, pour générer une étiquette de recherche en fonction du mot-clé, et pour mapper et stocker l'étiquette de recherche dans le contenu écrit et le fichier vocal correspondant au contenu écrit.

11. Procédé de commande d'un dispositif à tableau électronique, le procédé comportant les étapes consistant à :
afficher un écran divisé en une pluralité de zones (S1610) ;
recevoir une entrée d'écriture dans au moins des première et deuxième zones de la pluralité de zones (S1620) ;
recevoir une voix (S1630) ; et
**caractérisé par** les étapes consistant à :
commander le dispositif à tableau électronique pour stocker une voix qui est reçue en réponse à une entrée d'écriture qui est reçue dans une première zone de la pluralité de zones, sous forme d'un premier fichier vocal correspondant à la première zone, et pour stocker une voix qui est reçue en réponse à une entrée d'écriture qui est reçue dans une deuxième zone sous forme d'un deuxième fichier vocal correspondant à la deuxième zone, et commander le dispositif à tableau électronique à des fins d'affichage d'une interface utilisateur graphique (IUG) correspondant à chaque fichier vocal respectif dans sa zone correspondante de l'écran (S1640).

12. Procédé selon la revendication 11, comportant par ailleurs l'étape consistant à :
détecter une entrée d'écriture sur l'écran,
dans lequel l'étape consistant à commander comporte par ailleurs les étapes consistant à : démarrer un enregistrement vocal en réponse à la détection d'un début d'une entrée d'écriture dans au moins une zone, mettre fin à l'enregistrement vocal en réponse à la détection d'une fin de l'entrée d'écriture, et stocker une voix enregistrée sous forme d'un fichier vocal correspondant à la zone respective.

13. Procédé selon la revendication 11 ou la revendication 12, dans lequel :
l'étape consistant à afficher comporte par ailleurs l'étape consistant à : afficher des lignes de guidage qui divisent la pluralité de zones ; et
l'étape consistant à commander comporte par ailleurs les étapes consistant à : re-diviser et fournir la pluralité de zones pour correspondre à la ligne de guidage changée en réponse à une ligne de guidage pour au moins l'une de la pluralité de zones, qui est changée en fonction d'une commande d'utilisateur.

14. Procédé selon l'une quelconque des revendications 11 à 13, dans lequel l'étape consistant à commander comporte par ailleurs les étapes consistant à :
capturer et stocker une image écrite selon des intervalles de temps préréglés dans des trames, déterminer une différence d'images entre des images capturées respectivement dans les trames, et mapper et stocker un fichier vocal correspondant à la différence d'images déterminée en réponse à une entrée d'écriture d'image qui est reçue.

15. Procédé selon la revendication 14, dans lequel l'étape consistant à commander comporte par ailleurs :
l'étape consistant à fournir des fichiers vocaux mappés aux images sélectionnées en réponse à une commande pour sélectionner au moins une partie des images écrites en réponse à l'entrée d'écriture d'image qui est achevée.
